# DEMANDE DE BREVET EUROPEEN

(11) **EP 2 043 010 A1**
(43) Date de publication de la demande: **01.04.2009**
(21) Numéro de dépôt: 08162516.2
(22) Date de dépôt: 18.08.2008
(51) Int. Cl.: G06F 17/30

(54) **Dispositif d'indexage automatique de contenus**

(30) Priorité: 20.09.2007 FR 0757700
(71) Demandeur: Alcatel Lucent, 75008 Paris (FR)
(72) Inventeur: Toms, Yann, 75014 Paris (FR); Senot, Christophe, 75013 Paris (FR); Betge-Brezetz Stéphane, 75015 Paris (FR); Aghasaryan, Armen, 91600 Savigny-sur-Orge (FR)
(74) Mandataire: Hedarchet, Stéphane

(57) **Abrégé**

Un dispositif (D) est dédié à l'indexage de contenus qui sont mis à la disposition d'utilisateurs. Ce dispositif (D) comprend des moyens de traitement (MT) chargés d'associer à des contenus des métadonnées qui les définissent au moins partiellement en fonction d'informations contextuelles qui sont représentatives de l'utilisation de ces contenus par des utilisateurs, d'informations d'utilisateurs qui sont représentatives des profils des utilisateurs de ces contenus et de métadonnées qui ont été antérieurement associées à ces contenus.

## Description

L'invention concerne l'indexage de contenus, principalement multimédia, destiné à faciliter leur sélection en fonction des besoins et/ou des préférences (et/ou habitudes) d'utilisateurs connectés à des réseaux de communication via leurs terminaux de communication.

On entend ici par « contenu » un ensemble de données destinées à être affichées sur un écran et/ou diffusées par des haut-parleurs (ou équivalents), comme par exemple des programmes de télévision ou de radio, des fichiers de données (ou « data » en anglais), des fichiers de texte, des images ou des vidéos.

Par ailleurs, on entend ici par « réseau de communication » tout type d'infrastructure de communication bidirectionnelle, filaire ou non filaire, capable de diffuser des contenus (éventuellement multimédia) vers des terminaux, en mode « broadcast » (diffusion) et/ou « multicast » (point-à-multipoints) et/ou « unicast » (point-à-point). Par conséquent, il pourra s'agir d'un réseau filaire, par exemple de type xDSL ou à fibre ou encore à câble, ou d'un réseau sans fil tel qu'un réseau de diffusion (comme par exemple un réseau terrestre de type DVB-H (pour « Digital Video Broadcasting - Handhelds » - télévision mobile) ou un réseau satellitaire (par exemple de type DVB-S2 ou DVB-RCS), ou encore un réseau hybride, c'est-à-dire à la fois satellitaire et terrestre (comme par exemple un réseau de type DVB-SH (liaisons satellitaires avec relais terrestres)), ou qu'un réseau cellulaire (ou mobile) (comme par exemple un réseau de type GSM, GPRS/EDGE, UMTS ou CDMA (2000)), ou encore qu'un réseau local sans fil (WLAN, comme par exemple un réseau WiMAX ou Wi-Fi).

Enfin, on entend ici par « terminal de communication » tout équipement de communication fixe ou mobile (ou portable ou encore cellulaire) capable d'échanger des contenus avec un autre terminal de communication ou équipement de réseau, via un réseau de communication. Par conséquent, il pourra par exemple s'agir d'un téléphone fixe ou mobile (ou cellulaire), d'un ordinateur fixe ou portable, d'un assistant personnel numérique (ou PDA), d'un récepteur de contenus multimédia (par exemple un décodeur, une passerelle résidentielle (ou « residential gateway ») ou un STB (« Set-Top Box »)), dès lors qu'il est équipé de moyens de communication bidirectionnelle, éventuellement radio ou satellitaires.

En raison de l'augmentation permanente du nombre de contenus (de tout type) qui sont mis à la disposition d'utilisateurs (via leurs terminaux et via différents média), l'indexage des contenus est de plus en plus nécessaire si l'on veut faciliter leur sélection en fonction des besoins et/ou des préférences (et/ou habitudes) des utilisateurs.

Comme le sait l'homme de l'art, l'indexage consiste à associer des « métadonnées » (ou « meta-data ») à des contenus afin de les définir et/ou de les décrire au moins partiellement. Il est rappelé que les métadonnées sont généralement réparties dans trois domaines appelés « contenu » (comme par exemple le titre, le sujet, la description, le genre, des mots-clés, la source, la langue, la relation ou la couverture), « propriété intellectuelle » (comme par exemple le créateur, l'éditeur, le contributeur ou les droits) et « matérialisation » (comme par exemple la date, le type, le format ou l'identifiant).

Ces métadonnées sont particulièrement utiles aux applications pour catégoriser, classer, ou fournir une sélection optimale en fonction d'un profil d'utilisateur (comme décrit, notamment, dans les documents brevet WO 2007/103938 et EP 1189437). Elles sont généralement associées aux contenus correspondants par les opérateurs de réseau, les fournisseurs de contenus ou les utilisateurs (contenus personnels) et stockées dans un système de gestion de contenus (ou CMS (« Content Management System »)).

L'indexage de contenus personnels ou commerciaux (par création/ mise à jour de métadonnées) peut se faire soit manuellement, soit de façon automatisée. L'indexage manuel est fréquemment incomplet et/ou subjectif. L'indexage automatisé est actuellement limité et supporte difficilement une mise à l'échelle (ou « scalability »). Il repose généralement sur l'extraction d'informations au moyen de techniques d'analyse audio ou vidéo (par exemple par reconnaissance de formes) qui sont complexes, chronophages, et parfois peu pertinentes, voire même peu fiables. En outre, les métadonnées qui sont produites de façon automatisée sont figées et donc ne peuvent pas évoluer ou être mises à jour en fonction de l'utilisation que les utilisateurs font des contenus auxquels elles sont associées.

Par ailleurs, de (très) nombreux contenus personnels ne font pas l'objet d'un indexage en raison notamment du temps que cela nécessite et du fait que ces contenus ont habituellement une courte durée de vie.

L'invention a donc pour but d'améliorer la situation en matière d'indexage automatisé. Elle concerne en particulier les métadonnées plus subjectives du domaine « contenu » comme par exemple le genre, la description, et les mots-clés.

Elle propose à cet effet un dispositif dédié à l'indexage de contenus, mis à la disposition d'utilisateurs, et comprenant des moyens de traitement chargés d'associer à des contenus des métadonnées qui les définissent au moins partiellement en fonction d'informations contextuelles représentatives de l'utilisation de ces contenus par des utilisateurs, d'informations d'utilisateurs représentatives des profils des utilisateurs de ces contenus et de métadonnées associées antérieurement à ces contenus.

Le dispositif selon l'invention peut comporter d'autres caractéristiques qui peuvent être prises séparément ou en combinaison, et notamment :
- il peut comprendre des moyens d'extraction chargés d'extraire les informations contextuelles de traces d'utilisation de contenus, par exemple accessibles dans une plateforme de fourniture de services ;
   ➢ les traces d'utilisation d'un contenu peuvent par exemple être choisies parmi (au moins) la durée d'utilisation du contenu, l'horaire d'utilisation du contenu et le prix payé pour l'utilisation du contenu ;
- ses moyens de traitement peuvent comprendre, d'une part, des premiers moyens d'agrégation chargés d'agréger, pour chaque contenu qui a été utilisé par un utilisateur, des informations contextuelles qui sont représentatives de cette utilisation du contenu et des informations d'utilisateurs représentatives du profil de cet utilisateur afin de délivrer des informations agrégées primaires relatives à ce contenu, et d'autre part, des seconds moyens d'agrégation chargés d'agréger toutes les informations agrégées primaires qui sont relatives à un même contenu afin de délivrer des métadonnées relatives à ce contenu ;
   ➢ les premiers moyens d'agrégation peuvent être chargés de pondérer, pour chaque contenu utilisé par un utilisateur, des informations d'utilisateur choisies, représentatives du profil de cet utilisateur, par des informations contextuelles choisies, représentatives de cette utilisation du contenu, afin de délivrer des informations agrégées primaires relatives à ce contenu ;
   ➢ les seconds moyens d'agrégation peuvent être chargés de délivrer des métadonnées relatives à un contenu seulement lorsqu'ils sont en mesure d'agréger des informations agrégées primaires relatives à un même contenu et obtenues à partir d'un nombre de profils d'utilisateur différents supérieur ou égal à un seuil choisi ;
   ➢ il peut comprendre des moyens de stockage chargés de stocker au moins temporairement les informations agrégées primaires qui sont délivrées par les premiers moyens d'agrégation ;
   ➢ les moyens de traitement peuvent comprendre des moyens de mise à jour chargés de déterminer une modification des métadonnées qui ont été antérieurement associées à un contenu en fonction des métadonnées qui sont relatives à ce contenu et qui ont été délivrées par les seconds moyens d'agrégation ;
   ➢ il peut comprendre des moyens de contrôle chargés, lorsque les moyens de traitement proposent une modification des métadonnées qui ont été antérieurement associées à un contenu, de déterminer l'importance de la modification proposée et soit d'autoriser la modification proposée lorsque son importance est faible, soit d'adresser un message de demande d'autorisation de modification au fournisseur du contenu lorsque l'importance de la modification proposée est moyenne ou élevée puis d'autoriser la modification proposée en cas de réception d'un message d'autorisation ;
- il peut comprendre des moyens d'interface chargés de provoquer le stockage, dans des moyens de stockage de métadonnées, des métadonnées qui sont associées aux contenus par les moyens de traitement.

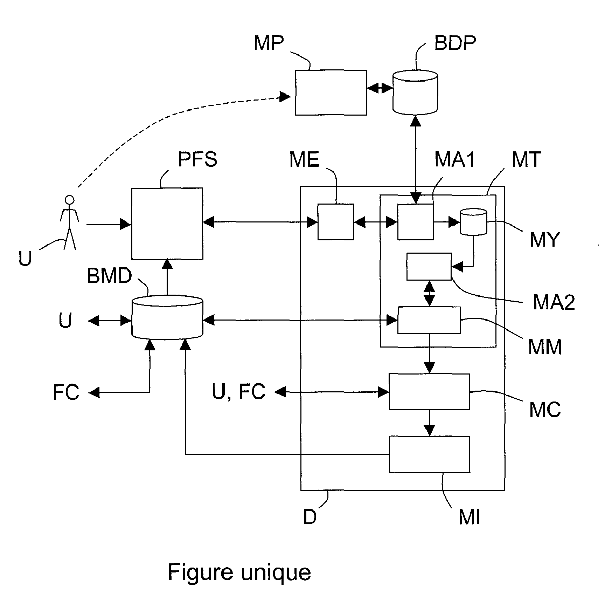

D'autres caractéristiques et avantages de l'invention apparaîtront à l'examen de la description détaillée ci-après, et du dessin annexé, sur lequel l'unique figure illustre de façon très schématique et fonctionnelle un exemple de réalisation d'un dispositif d'indexage selon l'invention couplé à une plateforme de fourniture de services, une base de métadonnées et une base de données de profils d'utilisateur.

Le dessin annexé pourra non seulement servir à compléter l'invention, mais aussi contribuer à sa définition, le cas échéant.

L'invention a pour objet de permettre l'indexage automatisé (création/mise à jour) de contenus de tout type (principalement multimédia) qui sont mis à la disposition d'utilisateurs (U), via des réseaux de communication du type de ceux définis dans la partie introductive et auxquels sont connectés leurs terminaux de communication.

L'invention propose à cet effet un dispositif d'indexage (automatique) de contenus D comprenant au moins un module de traitement MT chargé d'associer à des contenus des métadonnées, qui les définissent et/ou les décrivent au moins partiellement, en fonction d'informations contextuelles qui sont représentatives de l'utilisation de ces contenus par des utilisateurs, d'informations d'utilisateurs qui sont représentatives des profils des utilisateurs de ces contenus, et de métadonnées qui ont été antérieurement associées à ces contenus.

On entend ici par « information contextuelle » tout type d'information ayant un rapport direct ou indirect avec l'utilisation d'un contenu par un utilisateur, via un réseau de communication auquel est connecté son terminal de communication. De telles informations peuvent par exemple être extraites de ce que l'homme de l'art appelle fréquemment des traces d'utilisation de contenu.

Parmi ces traces d'utilisation, on peut par exemple (et non limitativement) citer :
- le prix qui a été payé par un utilisateur pour utiliser un contenu. On comprendra que si un utilisateur regarde jusqu'au bout un contenu dont le prix dépend de la durée d'utilisation, le prix qu'il a payé pour l'utilisation de ce contenu est un indicateur de son niveau de satisfaction et donc de la qualité de la correspondance entre les métadonnées associées et son profil (préférences et/ou habitudes),
- la durée pendant laquelle un utilisateur a utilisé un contenu, laquelle est notamment représentative du niveau d'adéquation entre le contenu et les métadonnées associées. On comprendra que si un utilisateur regarde jusqu'au bout un contenu c'est que ce dernier correspond assez bien ou totalement à son profil (préférences et/ou habitudes),
- l'horaire pendant lequel un utilisateur a utilisé un contenu, comme par exemple la matinée, l'après-midi ou la soirée. On comprendra qu'un contenu peut être considéré comme plutôt utilisable le soir lorsqu'il est majoritairement utilisé pendant la soirée par les utilisateurs).

De telles traces d'utilisation de contenu peuvent par exemple être obtenues par le dispositif D dans une plateforme de fourniture de services PFS (ou SDP (pour « Service Delivery Platform »)).

On notera que le dispositif D peut éventuellement comporter un module d'extraction ME chargé d'extraire des informations contextuelles choisies des traces d'utilisations des contenus par les utilisateurs, qui sont stockées dans la plateforme de fourniture de services PFS. Les informations contextuelles peuvent éventuellement être des traces d'utilisations qui ont été transformées (formatées) par le module d'extraction ME afin de pouvoir être exploitables par le module de traitement MT.

Par ailleurs, on entend ici par « information d'utilisateur » tout type d'information pouvant faire partie d'un profil d'utilisateur. Il est rappelé qu'un profil d'utilisateur est habituellement composé de données démographiques relatives à cet utilisateur (c'est-à-dire son sexe, son âge et son lieu d'habitation ou de travail), et/ou des préférences et/ou centres d'intérêt de cet utilisateur (type de contenu, genre de contenu, intérêts en général, passe-temps favoris (« hobbies »)), et/ou des habitudes d'utilisation de cet utilisateur. On notera qu'il est préférable que le profil soit le plus vaste possible et non pas uniquement constitué d'une préférence en matière de type ou de genre de contenu. Par exemple, une vidéo vue par des utilisateurs qui ont un centre d'intérêt commun, comme par exemple le bricolage, peut être associée au mot « bricolage ».

De telles informations d'utilisateurs peuvent être obtenues par le dispositif D dans une base de données de profils d'utilisateurs BDP qui est alimentée par un moteur de profils (ou « profile engine ») MP à partir d'informations fournies par les utilisateurs U ou par les opérateurs des réseaux de communication auxquels sont abonnés lesdits utilisateurs U.

Comme cela est illustré sur l'unique figure, le module de traitement MT peut comporter des premier MA1 et second MA2 modules d'agrégation. Le premier module d'agrégation MA1 est chargé d'agréger, pour chaque contenu qui est utilisé par un utilisateur U, des informations contextuelles qui sont représentatives de cette utilisation du contenu et des informations d'utilisateurs qui sont représentatives du profil de cet utilisateur U, afin de délivrer des informations agrégées primaires relatives à ce contenu.

Le premier module d'agrégation MA1 est par exemple chargé de pondérer, pour chaque contenu qui a été utilisé par un utilisateur U, des informations d'utilisateur choisies, représentatives du profil de cet utilisateur U, par des informations contextuelles choisies, représentatives de cette utilisation du contenu, afin de délivrer des informations agrégées primaires qui sont relatives à ce contenu.

Chaque agrégation peut par exemple se faire en pondérant des valeurs représentatives du profil de l'utilisateur d'un contenu avec des mesures quantitatives de la consommation de ce contenu par cet utilisateur (comme par exemple la durée d'utilisation et/ou le prix payé pour l'utilisation). On comprendra en effet que si un utilisateur a un profil qui est orienté vers les films d'action et qu'on lui a attribué la valeur « action=0,9 », alors si cet utilisateur a visualisé l'intégralité d'un film il existe une (très) forte probabilité pour que ce film soit un film d'action.

Comme cela est illustré sur l'unique figure, le dispositif D, et par exemple son module de traitement MT, peut comporter des moyens de stockage MY dans lesquels sont stockées, au moins de façon temporaire, les informations agrégées primaires qui sont délivrées par le premier module d'agrégation MA1. Ce stockage au moins temporaire est destiné à faciliter la mise à l'échelle de l'indexage. Ces moyens de stockage MY peuvent se présenter sous n'importe quelle forme dès lors qu'ils sont capables de stocker des enregistrements représentatifs chacun d'informations agrégées primaires en correspondance d'un identifiant de contenu. Il pourra par exemple s'agir d'une mémoire ou d'une base de données ou encore d'un fichier.

Le second module d'agrégation MA2 est chargé d'agréger toutes les informations agrégées primaires qui sont relatives à un même contenu, et qui ont été déterminées par le premier module d'agrégation MA1 (et par exemple stockées dans les moyens de stockage MY), afin de délivrer des métadonnées qui sont relatives à ce contenu. En d'autres termes, chaque fois que le second module d'agrégation MA2 intervient, il regroupe toutes les informations agrégées primaires qui sont relatives à un même contenu afin de les agréger en une ou plusieurs métadonnées. Cette agrégation se fait de manière à ce que chaque métadonnée corresponde à un modèle prédéterminé (ou « métamodèle »). Par exemple, une métadonnée peut représenter une catégorie d'intérêt associée à une valeur d'intérêt (action, 0,8) ou (aventure, 0,3).

On notera qu'il est préférable, pour des raisons de fiabilité statistique, que le second module d'agrégation MA2 ne délivre une métadonnée relative à un contenu, et donc n'effectue une agrégation, qu'à condition qu'il dispose d'informations agrégées primaires relatives à ce contenu obtenues à partir d'un nombre de profils d'utilisateur différents qui est supérieur ou égal à un seuil choisi. On comprendra en effet que plus on dispose d'informations agrégées primaires pour un même contenu, plus la (les) métadonnée(s) correspondante(s) seront en adéquation avec ce contenu, et donc plus elles seront fiables et/ou pertinentes. Par exemple, on peut choisir un seuil égal à 50 voire même beaucoup plus grand que 50.

Comme cela est illustré sur l'unique figure, le dispositif D, et de préférence son module de traitement MT, peut également (et éventuellement) comprendre un module de mise à jour MM chargé d'intervenir chaque fois que le second module d'agrégation MA2 délivre une (des) métadonnée(s) relative(s) à un contenu. Ce module de mise à jour MM est plus précisément chargé de déterminer si un contenu, qui vient de faire l'objet d'une détermination de métadonnée(s) par le module de traitement MT, a été antérieurement associé à des métadonnées, et dans l'affirmative si la (les) métadonnée(s) qui vien(nen)t d'être déterminée(s) est (sont) différente(s) de celles préexistantes.

Pour ce faire, le module de mise à jour MM peut par exemple accéder à des moyens de stockage de métadonnées BMD (ou CMS (pour « Content Management System »)) dans lesquels sont stockés les ensembles de métadonnées connues en correspondance des identifiants de contenu associés. Ces moyens de stockage de métadonnées BMD se présentent généralement sous la forme d'une base de données qui est alimentée en métadonnées associées manuellement à des identifiants de contenus par les fournisseurs de contenus FC et/ou par les utilisateurs U.

Si les métadonnées qui ont été antérieurement associées à un contenu diffèrent des (nouvelles) métadonnées relatives à ce même contenu, qui ont été déterminées par le second module d'agrégation MA2, alors le module de mise à jour MM délivre sur une sortie ces nouvelles métadonnées qui constituent alors une proposition de modification de métadonnées. En l'absence de différence, les nouvelles métadonnées ne sont pas délivrées puisqu'il est inutile de mettre à jour les métadonnées antérieures correspondantes.

Comme cela est illustré sur l'unique figure, le dispositif D peut également (et éventuellement) comprendre un module de contrôle MC chargé de déterminer si une proposition de modification de métadonnées issue du module de mise à jour MM doit ou non entraîner une mise à jour dans les moyens de stockage de métadonnées BMD. Un tel module de contrôle MC permet avantageusement d'assurer la cohérence de l'indexage.

Chaque fois que le module de mise à jour MM propose une modification des métadonnées qui ont été antérieurement associées à un contenu, le module de contrôle MC détermine l'importance de cette modification proposée. Si le module de contrôle MC estime que la modification proposée est de faible importance, c'est-à-dire qu'aucune nouvelle métadonnée proposée ne présente de différence significative avec une métadonnée antérieure, il n'autorise pas la mise à jour à partir de cette proposition. En revanche, si le module de contrôle MC estime que la modification proposée est d'importance moyenne ou élevée, c'est-à-dire qu'au moins une nouvelle métadonnée proposée présente une différence significative avec une métadonnée antérieure, il adresse un message de demande d'autorisation de modification au fournisseur de contenus FC ou à l'utilisateur U qui a fourni le contenu concerné.

Afin de déterminer si une modification est de faible importance ou bien d'importance moyenne ou élevée on peut par exemple effectuer un calcul de distance entre les métadonnées actuelles et les métadonnées proposées, et fixer un seuil au dessus duquel on considère que les modifications sont importantes. Par exemple, si l'on dispose initialement pour un contenu des métadonnées « action 0,8, aventure 0,5 » et que les métadonnées proposées sont « action 0,5, comédie 0,5 », alors on dispose de trois différences, une première égale à 0,3 (résultant de la différence entre action 0,8 et action 0,5), une deuxième égale à 0,5 (résultant de la différence entre aventure 0,8 et aventure 0) et une troisième égale à 0,5 (résultant de la différence entre comédie 0 et comédie 0,5). On effectue alors la somme de ces trois différences, ce qui donne 1,3 (0,3 + 0,5 + 0,5 = 1,3), et l'on compare le résultat de cette somme (1,3) à un seuil (par exemple égal à 0,5).

Si le module de contrôle MC ne reçoit pas de message d'autorisation ou bien s'il reçoit un message d'interdiction de mise à jour dans un délai choisi (temporisation), il interdit la mise à jour proposée. En revanche, si le module de contrôle MC reçoit un message d'autorisation dans le délai choisi, il autorise la mise à jour avec la proposition de modification.

Comme cela est illustré sur l'unique figure, le dispositif D peut également (et éventuellement) comprendre un module d'interface MI chargé de provoquer le stockage dans les moyens de stockage de métadonnées BMD des métadonnées qui sont proposées par le module de traitement MT, éventuellement après la procédure de vérification de l'intérêt d'une mise à jour et/ou la procédure de contrôle. En d'autres termes, ce module d'interface MI est chargé de mettre à jour les ensembles de métadonnées qui sont stockés dans les moyens de stockage de métadonnées BMD ou bien de créer de nouveaux ensembles de métadonnées dans ces derniers.

Une fois que les métadonnées décrivant les contenus ont été obtenues selon l'invention, une multitude d'applications faisant usage de leurs contenus informatifs peut être envisagée. Ainsi, on peut par exemple effectuer une recommandation de contenu en fonction du profil de l'utilisateur, ou effectuer une recherche de contenus par mots-clef, ou encore effectuer une recherche personnalisée en fonction du profil d'utilisateur.

Le dispositif d'indexage D selon l'invention, et notamment son module de traitement MT et ses éventuels module d'extraction ME, module de contrôle MC et module d'interface MI, peuvent être réalisés sous la forme de circuits électroniques, de modules logiciels (ou informatiques), ou d'une combinaison de circuits et de logiciels.

En proposant un indexage automatique de contenus plus pertinent, plus précis et plus fiable, pour un beaucoup plus grand nombre de contenus (y compris les contenus personnels), l'invention permet aux opérateurs de réseau de communication et aux fournisseurs de services ou de contenus d'offrir de meilleurs services à leurs clients.

L'invention ne se limite pas aux modes de réalisation de dispositif d'indexage décrits ci-avant, seulement à titre d'exemple, mais elle englobe toutes les variantes que pourra envisager l'homme de l'art dans le cadre des revendications ci-après.

## Revendications

1. Dispositif (D) d'indexage de contenus mis à la disposition d'utilisateurs, **caractérisé en ce qu'**il comprend des moyens de traitement (MT) agencés pour associer à des contenus des métadonnées qui les définissent au moins partiellement en fonction d'informations contextuelles représentatives de l'utilisation desdits contenus par des utilisateurs, d'informations d'utilisateurs représentatives des profils des utilisateurs desdits contenus et de métadonnées associées antérieurement auxdits contenus.

2. Dispositif selon la revendication 1, **caractérisé en ce qu'**il comprend des moyens d'extraction (ME) agencés pour extraire lesdites informations contextuelles de traces d'utilisation de contenus accessibles dans une plateforme de fourniture de services (PFS).

3. Dispositif selon la revendication 2, **caractérisé en ce que** lesdites traces d'utilisation d'un contenu sont choisies dans un groupe comprenant au moins la durée d'utilisation dudit contenu, l'horaire d'utilisation dudit contenu et le prix payé pour l'utilisation dudit contenu.

4. Dispositif selon l'une des revendications 1 à 3, **caractérisé en ce que** lesdits moyens de traitement (MT) comprennent i) des premiers moyens d'agrégation (MA1) agencés pour agréger, pour chaque contenu utilisé par un utilisateur, des informations contextuelles représentatives de cette utilisation du contenu, des informations d'utilisateurs représentatives du profil de cet utilisateur, de manière à délivrer des informations agrégées primaires relatives audit contenu, et ii) des seconds moyens d'agrégation (MA2) agencés pour agréger toutes les informations agrégées primaires relatives à un même contenu, de manière à délivrer des métadonnées relatives audit contenu.

5. Dispositif selon la revendication 4, **caractérisé en ce que** lesdits premiers moyens d'agrégation (MA1) sont agencés pour pondérer, pour chaque contenu utilisé par un utilisateur, des informations d'utilisateur choisies, représentatives du profil de cet utilisateur, par des informations contextuelles choisies, représentatives de cette utilisation du contenu, de manière à délivrer des informations agrégées primaires relatives audit contenu.

6. Dispositif selon l'une des revendications 4 et 5, **caractérisé en ce que** lesdits seconds moyens d'agrégation (MA2) sont agencés pour délivrer des métadonnées relatives à un contenu lorsqu'ils sont en mesure d'agréger des informations agrégées primaires relatives à un même contenu et obtenues à partir d'un nombre de profils d'utilisateur différents supérieur ou égal à un seuil choisi.

7. Dispositif selon l'une des revendications 4 à 6, **caractérisé en ce qu'**il comprend des moyens de stockage (MY) agencés pour stocker au moins temporairement lesdites informations agrégées primaires délivrées par lesdits premiers moyens d'agrégation (MA1).

8. Dispositif selon l'une des revendications 4 à 7, **caractérisé en ce que** lesdits moyens de traitement (MT) comprennent des moyens de mise à jour (MM) agencés pour déterminer une modification des métadonnées associées antérieurement à un contenu en fonction desdites métadonnées relatives à ce contenu et délivrées par lesdits seconds moyens d'agrégation (MA2).

9. Dispositif selon l'une des revendications 4 à 8, **caractérisé en ce qu'**il comprend des moyens de contrôle (MC) agencés, lorsque lesdits moyens de traitement (MT) proposent une modification des métadonnées associées antérieurement à un contenu, pour déterminer l'importance de ladite modification proposée et soit pour autoriser ladite modification proposée lorsque son importance est faible, soit pour adresser un message de demande d'autorisation de modification au fournisseur dudit contenu lorsque l'importance de la modification proposée est moyenne ou élevée puis pour autoriser ladite modification proposée en cas de réception d'un message d'autorisation.

10. Dispositif selon l'une des revendications 1 à 9, **caractérisé en ce qu'**il comprend des moyens d'interface (MI) agencés pour provoquer le stockage dans des moyens de stockage de métadonnées (BMD) des métadonnées qui sont associées auxdits contenus par lesdits moyens de traitement (MT).
